# FASCICULE DE BREVET EUROPEEN

(11) **EP 3 356 686 B1**
(45) Date de publication et mention de la délivrance du brevet: **28.10.2020**
(21) Numéro de dépôt: 16775802.8
(22) Date de dépôt: 07.09.2016
(51) Int. Cl.: F16B 5/08, B23K 11/11, B62D 27/02, F16B 11/00

(54) **ASSEMBLAGE D'ELEMENTS EN TÔLE METALLIQUE COMPRENANT UNE FEUILLURE**
ANORDNUNG VON BLECHTEILEN MIT STUFENFALZ
ASSEMBLY OF SHEET METAL ELEMENTS COMPRISING A SHIPLAP

(30) Priorité: 30.09.2015 FR 1559302
(43) Date de publication de la demande: 08.08.2018
(73) Titulaire: PSA AUTOMOBILES S.A., 78300 Poissy (FR)
(72) Inventeur: STROZYK, Gregory, 77330 Ozoir La Ferriere (FR); LENOIR, Romaric, 78560 Le Port Marly (FR); MAGNAUD, Florian, 91190 Gif Sur Yvette (FR)
(74) Mandataire: Fernandez, Francis Lionel
(86) Numéro de dépôt international: PCT/FR2016/052222
(87) Numéro de publication internationale: WO 2017/055699

(56) Documents cités:
- JP-A- H0 453 882
- JP-A- H0 453 882
- JP-A- 2004 082 136
- JP-A- 2004 082 136
- JP-A- 2006 213 262
- JP-A- 2006 213 262
- JP-A- 2013 052 423
- JP-A- 2013 052 423

## Description

L'invention a trait au domaine des assemblages de tôles métalliques, notamment d'emboutis de véhicule automobile. Plus particulièrement, l'invention a trait à un assemblage de tôles métalliques formant une feuillure et à un procédé de réalisation d'un tel assemblage.

Une structure de caisse de véhicule automobile est formée d'assemblages d'emboutis qui comprennent des bords superposés formant des feuillures de jonction des emboutis. La rigidité d'une structure de caisse dépend en partie de la rigidité des emboutis utilisés, elle dépend également en partie de la rigidité des feuillures de jonction. Un manque de rigidité des feuillures de jonction peut en réduisant la rigidité de la caisse par exemple impacter le confort de roulage ou la qualité de tenue de route.

Le document de brevet US 2007/0245541 A1 divulgue un assemblage d'au moins deux éléments en tôle métallique comprenant, chacun, un bord. Les bords des éléments sont superposés pour former une feuillure de jonction des éléments. Les bords des éléments sont assemblés par des points de soudage par résistance électrique qui sont répartis le long de la feuillure ainsi que par un cordon de colle dans la feuillure. Un des bords de l'assemblage comprend, en outre, une zone circulaire à l'intérieur de laquelle est réalisé le point de soudage électrique et qui comprend des portions mises à forme en saillie en regard du bord de l'élément opposé. Les portions en saillie permettent de contrôler la quantité de colle restant dans la feuillure après soudage. La solution de cet enseignement est onéreuse en ce qu'elle requiert une mise à forme d'un des bords de l'assemblage ce qui impacte le coût de l'assemblage. L'enseignement est par ailleurs généralement relatif au nettoyage de colle sur l'assemblage.

Le document JP 200482136 propose un assemblage de tôles réalisé par des points de soudure entre des tirets de collage, la colle étant logée dans un logement ménagé entre les tôles, l'une des tôles étant conformée pour s'écarter de l'autre tôel pour ménager un espace entre.

L'invention a pour objectif de proposer une solution palliant au moins un inconvénient de l'état de la technique, en particulier de l'état de la technique susmentionné. Plus particulièrement, l'invention a pour objectif de proposer une solution pour faciliter la réalisation d'un assemblage efficace d'éléments en tôle métalliques et qui soit économique.

L'invention a pour objet un assemblage d'au moins deux éléments en tôle métallique comprenant, chacun, un bord, lesdits bords étant superposés pour former une feuillure de jonction desdits éléments, lesdits bords étant assemblés par : des points de soudure répartis le long de la feuillure ; et de l'adhésif dans la feuillure ; l'adhésif formant des cordons s'étendant exclusivement entre les points de soudure et remarquable en ce que les cordons présentent une largeur réduite à ses extrémités adjacentes auxdits points de soudure.

La largeur réduite s'entend par rapport à la largeur moyenne sur le reste du cordon et la largeur est ici la dimension du cordon se trouvant avec la longueur dudit cordon dans le plan de dépose correspondant à l'un des bords d'un des éléments et au plan d'assemblage des deux bords superposés des éléments en tôle métallique, c'est-à-dire le plan de la feuillure. La hauteur du cordon déposé définit l'épaisseur de l'assemblage entre les deux éléments.

Selon un mode avantageux de l'invention, chacune des extrémités des cordons d'adhésif de largeur réduite s'étend sur une longueur correspondant à plus de 15%, préférentiellement 20%, de la longueur totale du cordon correspondant.

Selon un mode avantageux de l'invention, la largeur moyenne de chacune des extrémités des cordons d'adhésif est comprise entre 30% et 90%, préférentiellement entre 50% et 80% de la largeur moyenne du reste du cordon correspondant.

Selon un mode avantageux de l'invention, les points de soudure sont répartis sur la feuillure suivant un axe, les cordons d'adhésif s'étendant le long de la feuillure suivant ledit axe.

Selon un mode avantageux de l'invention, les extrémités des cordons adjacentes aux points de soudure sont d'une longueur supérieure à 3mm, préférentiellement supérieure à 5mm.

Selon un mode avantageux de l'invention, les cordons présentent une distance « d » avec chacun des points de soudure, les extrémités desdits cordons adjacentes auxdits points de soudure étant d'une longueur comprise entre 100% et 200% de ladite distance « d ».

Selon un mode avantageux de l'invention, l'adhésif est une colle à base d'époxy ou à base de polyuréthane élastomère.

Selon un mode avantageux de l'invention, les points de soudure sont obtenus par soudage tel que soudage par résistance électrique, soudage laser. Ils sont avantageusement répartis à pas constant, ledit pas étant compris entre 20mm et 200mm, préférentiellement entre 40mm et 100mm.

Selon un mode avantageux de l'invention, les extrémités des cordons d'adhésif présentant une largeur réduite sont de forme générale identique.

L'invention a également pour objet un procédé de réalisation d'un assemblage conforme à l'invention, remarquable par les étapes suivantes : - dépose des cordons d'adhésif sur le bord d'un des éléments ; - assemblage d'un autre des éléments sur l'élément ; - réalisation des points de soudure entre les cordons d'adhésif.

Selon un mode avantageux de l'invention, l'adhésif se présente à la dépose sous la forme d'un cordon de section arrondie ou de section rectangulaire.

Selon un mode avantageux de l'invention, l'adhésif se présente sous une forme liquide ou pâteuse.

Selon un mode avantageux de l'invention, les extrémités des cordons de colle sont venues par limitation d'un débit de colle nominal, ladite limitation étant une fraction comprise entre 20% et 50% dudit débit de colle nominal. Le débit de colle nominal s'entend le débit de colle choisi pour déposer le reste des cordons de colle.

Les mesures de l'invention sont intéressantes en ce que l'assemblage des éléments métalliques est efficace. En effet, les cordons d'adhésif et les points de soudure sont adjacents et les extrémités des cordons sont ajustées de sorte à ce que les cordons et les points de soudure contribuent à la rigidité de l'assemblage. Les extrémités des cordons de largeur réduite par rapport à la largeur moyenne sur le reste du cordon s'accordent en effet à l'espace réduit entre les bords des éléments en tôle à proximités des points de soudure. Par ailleurs, les cordons de colle sont favorablement réalisés pour ne pas déborder des bords de l'assemblage ce qui est plus économique.

D'autres caractéristiques et avantages de la présente invention seront mieux compris à l'aide de la description et des dessins parmi lesquels :
- La figure 1 est une vue de côté d'un assemblage de deux éléments en tôle métallique conforme à l'invention ;
- La figure 2 est une vue de dessus de l'assemblage de la figure 1 ;
- La figure 3 est une illustration d'un procédé de réalisation de l'assemblage de la figure 1 conforme à l'invention et à une première étape du procédé ;
- La figure 4 est une illustration du procédé de réalisation de l'assemblage de la figure 1 conforme à l'invention et à une deuxième étape du procédé ;
- La figure 5 est une illustration du procédé de réalisation de l'assemblage de la figure 1 conforme à l'invention et à une troisième étape du procédé ;

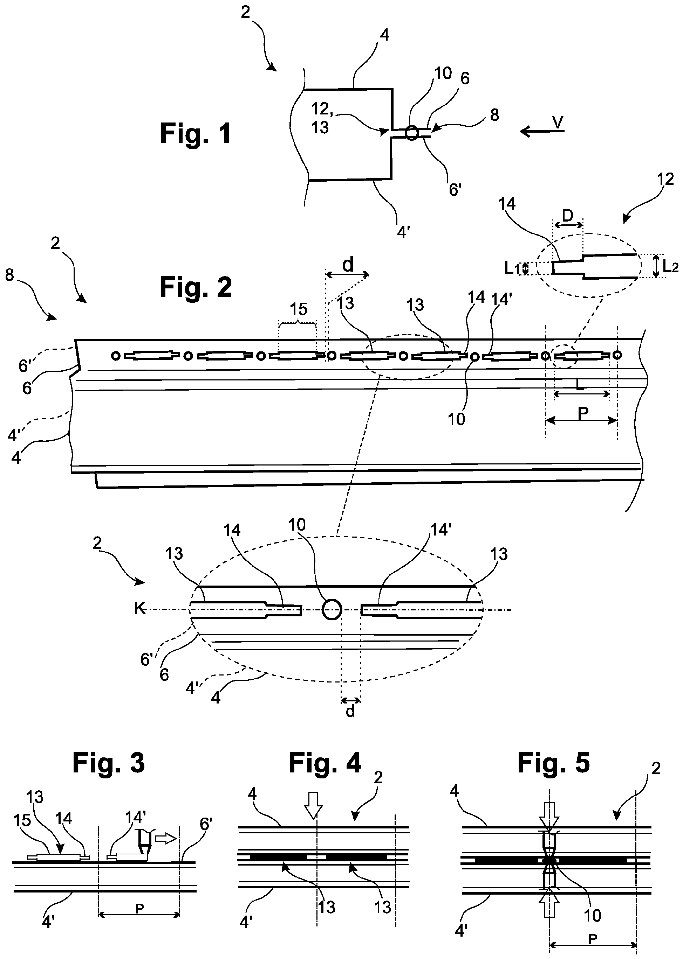

La figure 1 est une vue de côté d'un assemblage 2 de deux éléments 4 et 4' en tôle métallique conforme à l'invention. Les éléments comprennent chacun un bord 6 et 6' et les bords des éléments sont superposés pour former une feuillure de jonction 8 des éléments. Les bords sont assemblés par des points de soudure par résistance électrique 10 qui sont répartis le long de la feuillure ainsi que par de l'adhésif 12 qui forme des cordons 13 qui s'étendent exclusivement entre les points de soudure et qui présentent des extrémités adjacentes aux points de soudure et de largeur réduite par rapport à la largeur sur le reste des cordons. L'assemblage est en l'occurrence un assemblage de deux profilés, cela ne limite en rien l'invention.

La figure 2 est une vue de dessus de l'assemblage 2 des deux éléments 4 et 4' en tôle métallique conforme à l'invention. Les éléments comprennent les bords 6 et 6' superposés pour former la feuillure 8. L'élément 4' (en dessous) n'est pas visible sur l'image. On peut voir les cordons d'adhésif 13 qui s'étendent exclusivement entre les points de soudure 10 ; on peut également voir les extrémités 14 et 14' des cordons 13 qui sont adjacentes aux points de soudure et qui ont une largeur réduite par rapport à celle sur le reste 15 des cordons. Il est à noter que les cordons d'adhésif 13 sont représentés dans leur forme avant l'assemblage. La largeur est ici la dimension du cordon se trouvant avec la longueur des cordons dans le plan de dépose sur un bord d'un des éléments avant assemblage.

Après l'assemblage, les cordons sont déformés par écrasement, et la largeur des cordons écrasés dans le plan d'assemblage des deux bords superposés des éléments en tôle métallique, c'est-à-dire le plan de la feuillure, est également réduite aux extrémités desdits cordons écrasés.

Nous décrirons en détail le procédé conforme à l'invention de réalisation de cet assemblage en relation avec les figures 3 à 5. Il est bon toutefois de noter que les bords 6 et 6' assemblés par des points de soudure 10 en combinaison avec de l'adhésif 12 subissent une déformation en périphérie des points de soudure. Ce phénomène est bien connu de l'homme de l'art et n'est donc pas décrit plus en détail ici. On peut toutefois exprimer d'une manière simplifiée que l'espace disponible entre les bords pour loger l'adhésif se réduit en se rapprochant des points de soudure. Il est aussi intéressant de mentionner que la déformation en question n'est pas identique pour chaque assemblage, elle dépend par exemple de l'épaisseur et/ou de la rigidité des bords en tôle métallique qui sont assemblés. Elle dépend aussi de la taille des points de soudure. Ceci dit, chacune des extrémités 14 et 14' des cordons d'adhésif de largeur réduite selon l'invention peuvent s'étendre sur une longueur « D » correspondant à plus de 15%, préférentiellement 20%, de la longueur totale « L » du cordon correspondant. En particulier, les extrémités 14 et 14' des cordons d'adhésif 13 peuvent être d'une longueur «D» qui est supérieure à 3mm, préférentiellement supérieure à 5mm. Cette mesure est intéressante en ce que les extrémités des cordons de largeur réduite peuvent être de longueur adaptée selon le profil de la déformation des bords des éléments exprimée plus haut ce qui est favorable pour éviter un débordement d'adhésif en dehors des bords.

On peut voir dans le mode de réalisation particulier ici présenter que les cordons d'adhésif s'étendent le long des feuillures et dans un même axe « K » suivant lequel sont répartis les points de soudure 10. On peut voir l'axe « K » sur la portion agrandie de l'image. Les cordons sont en l'occurrence répartis à pas « P » constant de 60mm. Cette mesure ne limite pas l'invention, les points de soudure 10 peuvent être répartis à pas compris entre 20mm et 200mm, ou bien préférentiellement à pas compris entre 40mm et 100mm. En l'occurrence l'adhésif 12 est une colle structurelle qui peut être à base d'époxy ou bien à base de polyuréthane élastomère.

Nous pouvons observer que les cordons d'adhésif 13 sont à une distance « d » avec les points de soudure 10, distance sur laquelle la feuillure ne comprend pas d'adhésif. Il est à noter que la réalisation des points de soudure porte à fusion des portions des bords des éléments de sorte que de l'énergie calorifique tend à être transférée sur les cordons d'adhésif adjacents. Ce phénomène peut être néfaste aux performances de l'adhésif, il peut par exemple transformer sa composition chimique et notoirement réduire la caractéristique d'énergie de rupture de l'adhésif. Les distances « d » entre les cordons d'adhésifs et les points de soudure peuvent éviter cette dégradation. Les extrémités des cordons d'adhésif peuvent être d'une longueur « D » corrélée à la distance « d ». En particulier, les extrémités des cordons d'adhésif peuvent être d'une longueur « D » comprise entre 100% et 200% de la longueur de la distance « d ». Cette mesure de l'invention est intéressante pour réduire l'impact de la transmission d'énergie calorifique des points de soudure sur les cordons d'adhésif. Nous pouvons observer que dans le mode de réalisation particulier ici présenté, chacune des extrémités des cordons d'adhésif peut être d'une largeur moyenne « L₁ » comprise entre 30% et 90%, préférentiellement entre 50% et 80%, de la largeur moyenne « L₂ » du reste du cordon correspondant. Les extrémités et le reste des cordons présentent sur l'image des largeurs constantes, cette représentation ne limite nullement l'invention. Il est à noter que la mesure de la largeur des cordons d'adhésif est une mesure particulière corrélée au volume ou la quantité d'adhésif des cordons. Le volume d'adhésif dans la feuillure dépend de l'assemblage.

Les figures 3 à 5 illustrent le procédé de réalisation conforme à l'invention d'un assemblage de deux éléments en tôle métallique conforme à l'invention. La figure 3 illustre une première étape du procédé. La figure 4 illustre une deuxième étape du procédé. La figure 5 illustre une troisième étape du procédé. Sur ces trois figures le ou les éléments sont vus de face.

La première étape du procédé de l'invention va être décrite en référence à la figure 3.

À cette première étape du procédé, un adhésif est déposé sous forme de cordons 13 sur le bord 6' d'un des deux éléments 4' en tôle métallique. Les cordons de colle 13 peuvent être déposés par un dispositif produisant un débit de colle discontinu et les extrémités 14 et 14' des cordons de colle peuvent venir par limitation d'un débit colle nominal fournit par le dispositif en question, le reste des cordons de colle 15 pouvant venir du débit de colle nominal fournit par le dispositif. Cette mesure est intéressante, en ce qu'elle rend l'assemblage économique. On peut voir sur l'image une buse de colle en cours d'encollage ; le cordon de droite sur l'image représenté schématiquement n'étant pas complétement réalisé. Dans ce mode de réalisation de la dépose des cordons, ces derniers sont déposés à pas constant égal au pas selon lequel sont répartis les points de soudure.

La deuxième étape du procédé de l'invention va être décrite en référence à la figure 4.

A cette deuxième étape du procédé, un deuxième élément 4 est assemblé sur le premier élément 4' pour réaliser l'assemblage 2 des deux éléments 4 et 4' au niveau des bords juxtaposés et ainsi former la feuillure de jonction. Il est à noter que les cordons à cette étape sont déformés par écrasement. La déformation peut comprendre un fluage des cordons de colle en particulier dans la direction des points de soudure. La largeur des extrémités reste elle réduite par rapport à la largeur du reste du cordon après déformation. La longueur des extrémités de largeur réduite des cordons peut être adaptée pour que les cordons présentent toujours après déformation un écart de distance avec les points de soudure. Une fois que les cordons d'adhésif 13 sont en contact avec le bord de l'élément 4, l'assemblage 2 peut se rigidifier. Le temps de rigidification est cependant généralement dépendant du type d'adhésif utilisé.

La troisième étape du procédé de l'invention va être décrite en référence à la figure 5.

A cette troisième étape du procédé de l'invention, des points de soudure 10 par résistance électrique sont réalisés sur les bords des éléments entre les cordons d'adhésif. On peut voir représentée sur l'image une tête de soudage en vue de réaliser un des points de soudage 10 de l'assemblage. Une fois le soudage réalisé, un maintien de l'assemblage n'est pas nécessaire.

## Revendications

1. Assemblage (2) d'au moins deux éléments (4, 4') en tôle métallique comprenant, chacun, un bord (6, 6'), lesdits bords étant superposés pour former une feuillure de jonction (8) desdits éléments, lesdits bords étant assemblés par :
- des points de soudure (10) répartis le long de la feuillure ; et
- de l'adhésif (12) dans la feuillure ;
l'adhésif (12) formant des cordons (13) s'étendant exclusivement entre les points de soudure (10) **caractérisé en ce que** les cordons présentent une largeur réduite à ses extrémités (14, 14') adjacentes auxdits points de soudure.

2. Assemblage (2) selon la revendication 1, **caractérisé en ce que** chacune des extrémités (14, 14') des cordons d'adhésif (13) de largeur réduite s'étend sur une longueur (D) correspondant à plus de 15%, préférentiellement 20%, de la longueur totale (L) du cordon correspondant.

3. Assemblage (2) selon l'une des revendications 1 et 2, **caractérisé en ce que** la largeur moyenne (L₁) de chacune des extrémités (14, 14') des cordons d'adhésif (13) est comprise entre 30% et 90%, préférentiellement entre 50% et 80% de la largeur moyenne (L₂) du reste du cordon correspondant.

4. Assemblage (2) selon l'une des revendications 1 à 3, **caractérisé en ce que** les points de soudure (10) sont obtenus par soudage tel que soudage par résistance électrique, soudage laser.

5. Assemblage (2) selon l'une des revendications 1 à 4, **caractérisé en ce que** les extrémités (14, 14') des cordons (13) adjacentes aux points de soudure (10) sont d'une longueur (D) supérieure à 3mm, préférentiellement supérieure à 5mm.

6. Assemblage (2) selon l'une des revendications 1 à 4, **caractérisé en ce que** les cordons (13) présentent une distance (d) avec chacun des points de soudure (10), les extrémités (14, 14') desdits cordons (13) adjacentes auxdits points de soudure étant d'une longueur (D) comprise entre 100% et 200% de ladite distance (d).

7. Assemblage (2) selon l'une des revendications 1 à 6, **caractérisé en ce que** l'adhésif (12) est une colle à base d'époxy ou à base de polyuréthane élastomère.

8. Assemblage (2) selon l'une des revendications 1 à 7, **caractérisé en ce que** les points de soudure (10) sont répartis à pas constant, ledit pas étant compris entre 20mm et 200mm, préférentiellement entre 40mm et 100mm.

9. Procédé de réalisation d'un assemblage (2) selon l'une des revendications 1 à 8, **caractérisé par** les étapes suivantes :
- dépose des cordons d'adhésif (13) sur le bord (6') d'un des éléments (4') ;
- assemblage d'un autre des éléments (4) sur l'élément (4') ;
- réalisation des points de soudure (10) entre les cordons d'adhésif (13) ;

10. Procédé selon la revendication 9, **caractérisé en ce que** les extrémités (14, 14') des cordons de colle (13) sont venues par limitation d'un débit de colle nominal, ladite limitation étant une fraction comprise entre 20% et 50% dudit débit.

## Patentansprüche

1. Anordnung (2) von mindestens zwei Blechelementen (4, 4'), die jeweils eine Kante (6, 6') umfassen, wobei die Kanten überlagert sind, um einen Verbindungsfalz (8) der Elemente zu bilden, wobei die Kanten zusammengebaut werden von:
- Schweißpunkte (10) entlang des Falzes verteilt; und
- Kleber (12) im Falz;
**dadurch gekennzeichnet**:
Der Klebstoff (12) bildet Perlen (13), die sich ausschließlich zwischen den Schweißpunkten (10) erstrecken und an ihren Enden (14, 14') neben den Schweißpunkten eine verringerte Breite aufweisen.

2. Anordnung (2) nach Anspruch 1, **dadurch gekennzeichnet, dass** sich jedes der Enden (14, 14') der Klebeperlen (13) mit reduzierter Breite über eine Länge (D) erstreckt, die vorzugsweise mehr als 15% entspricht 20% der Gesamtlänge (L) der entsprechenden Schnur.

3. Anordnung (2) nach einem der Ansprüche 1 und 2, **dadurch gekennzeichnet, dass** die durchschnittliche Breite (l_i) jedes der Enden (14, 14 ') der Klebeperlen (13) zwischen 30% und 90% liegt vorzugsweise zwischen 50% und 80% der durchschnittlichen Breite (l_2) des Restes der entsprechenden Perle.

4. Anordnung (2) nach einem der Ansprüche 1 bis 3, **dadurch gekennzeichnet, dass** die Schweißpunkte (10) durch Schweißen wie elektrisches Widerstandsschweißen, Laserschweißen erhalten werden.

5. Baugruppe (2) nach einem der Ansprüche 1 bis 4, **dadurch gekennzeichnet, dass** die den Schweißnähten (10) benachbarten Enden (14, 14') der Perlen (13) eine Länge (D) von mehr als 3 mm aufweisen vorzugsweise größer als 5 mm.

6. Anordnung (2) nach einem der Ansprüche 1 bis 4, **dadurch gekennzeichnet, dass** die Perlen (13) einen Abstand (d) zu jedem der Schweißpunkte (10) aufweisen, wobei die Enden (14, 14') der Perlen (13) 13) benachbart zu den Schweißnähten mit einer Länge (D) zwischen 100% und 200% des Abstands (d).

7. Anordnung (2) nach einem der Ansprüche 1 bis 6, **dadurch gekennzeichnet, dass** der Klebstoff (12) ein Klebstoff auf Epoxidbasis oder ein Klebstoff auf Elastomerbasis auf Polyurethanbasis ist.

8. Anordnung (2) nach einem der Ansprüche 1 bis 7, **gekennzeichnet dadurch, dass** die Schweißpunkte (10) mit konstanter Teilung verteilt sind, wobei die Teilung zwischen 20 mm und 200 mm, vorzugsweise zwischen 40 mm und 100 mm liegt.

9. Verfahren zur Herstellung einer Baugruppe (2) nach einem der Ansprüche 1 bis 8, **gekennzeichnet durch** die folgenden Schritte:
- Aufbringen von Klebeperlen (13) auf die Kante (6 ') eines der Elemente (4');
- Zusammenbau eines anderen Elements (4) am Element (4');
- Herstellung der Schweißpunkte (10) zwischen den Kleberaupen (13).

10. Verfahren nach Anspruch 9, **dadurch gekennzeichnet, dass** die Enden (14, 14') der Klebstoffperlen (13) durch Begrenzen einer nominalen Fließgeschwindigkeit des Klebstoffs entstanden sind, wobei die Begrenzung ein Anteil zwischen 20% und 50% des Klebstoffs ist Lastschrift.

## Claims

1. Assembly (2) of at least two sheet metal elements (4, 4 ') each comprising an edge (6, 6'), said edges being superimposed to form a junction rebate (8) of said elements, said edges being assembled by:
- welding points (10) distributed along the rebate; and
- adhesive (12) in the rebate;
**characterized in that**:
the adhesive (12) forms beads (13) extending exclusively between the welding points (10) and having a reduced width at its ends (14, 14 ') adjacent to said welding points.

2. Assembly (2) according to claim 1, **characterized in that** each of the ends (14, 14') of the adhesive beads (13) of reduced width extends over a length (D) corresponding to more than 15%, preferably 20%, of the total length (L) of the corresponding cord.

3. Assembly (2) according to one of claims 1 and 2, **characterized in that** the average width (l_i) of each of the ends (14, 14') of the adhesive beads (13) is between 30% and 90% , preferably between 50% and 80% of the average width (l_2) of the rest of the corresponding bead.

4. Assembly (2) according to one of claims 1 to 3, **characterized in that** the weld spots (10) are obtained by welding such as electrical resistance welding, laser welding.

5. Assembly (2) according to one of claims 1 to 4, **characterized in that** the ends (14, 14 ') of the beads (13) adjacent to the welds (10) are of a length (D) greater than 3mm , preferably greater than 5mm.

6. Assembly (2) according to one of claims 1 to 4, **characterized in that** the beads (13) have a distance (d) with each of the weld points (10), the ends (14, 14') of said beads (13) adjacent to said welds being of a length (D) of between 100% and 200% of said distance (d).

7. Assembly (2) according to one of claims 1 to 6, **characterized in that** the adhesive (12) is an epoxy-based adhesive or an elastomeric polyurethane-based adhesive.

8. Assembly (2) according to one of claims 1 to 7, **characterized in that** the weld spots (10) are distributed at constant pitch, said pitch being between 20mm and 200mm, preferably between 40mm and 100mm.

9. Method for producing an assembly (2) according to one of claims 1 to 8, **characterized by** the following steps:
- depositing adhesive beads (13) on the edge (6 ') of one of the elements (4');
- assembly of another of the elements (4) on the element (4 ');
- production of the welding points (10) between the adhesive beads (13);

10. Process according to Claim 9, **characterized in that** the ends (14, 14 ') of the beads of adhesive (13) have come by limiting a nominal flow rate of adhesive, said limitation being a fraction between 20% and 50% of said debit.
